# EUROPEAN PATENT APPLICATION

(11) **EP 2 254 081 A1**
(43) Date of publication of application: **24.11.2010**
(21) Application number: 09460021.0
(22) Date of filing: 20.05.2009
(51) Int. Cl.: G06Q 10/00

(54) **System of warehouse and logistic services**

(71) Applicant: Przedsiebiorstwo Handlowo-Uslugowe ,,BAWI" Leszek Wizner, 15-399 Bialystok (PL)
(72) Inventor: Wizner, Leszek, 15-399 Bialysok (PL)

(57) **Abstract**

System of warehouse and logistic services features interconnection of elements such as technology, computer system and manner of communication. The system allows rendering services to small and medium enterprises, without restrictions as to the amount and time of goods storage. The flow of the goods occurs in the receipt-and-release, storage and compilation zones. The storage zone is equipped with mobile or stationary racks with at least four levels. Goods are moved with high lift trucks. The storage zone is connected to the receipt-and-release and compilation zones. The receipt-and-release and compilation zones are equipped with a set of conveyors and belt conveyors as well as wrapping machine and gate. The whole flow of loads and management of traffic of particular equipment elements and controlling the storage space together with the management of work of the whole centre seven days a week and 24 hours a day occurs through a computer system.

## Description

The subject of the invention is a system of warehouse and logistic services.

So far the warehouse and logistic servicing of enterprises has consisted in renting the space for storing goods.
The essence of this solution is creation of servicing system of logistic and warehouse process outsourcing, featuring interconnections of elements in the form of technology, information system and manner of communication, which entirely changes the solutions applied in companies to date.

The system allows rendering services to small and medium enterprises, without restrictions as to the amount and time of storing the goods in warehouses. The flow of goods occurs in three zones: receipt and release, storage and compilation. The storage zone is equipped with mobile or stationary racks with at least four levels. Goods are moved with high-lift trucks. The storage zone is connected to the receipt-and-release zone and the compilation zone. The receipt-and-release and compilation zones are equipped with a set of conveyors and belt conveyors as well as gate and wrapping machine. The process of load flow, management of the traffic of particular elements of the equipment and monitoring of the storage area (including the management of the whole centre operation seven days a week and 24 hours a day) is operated by a computer system. The customer is able to control and manage the load stored from the level of his/her own computer through the Internet.

Goods may be delivered/collected by the ordering party or through a service of the logistic centre. At the customer's request, the pallets may be repackaged, a compilation of a pallet or several pallets may be performed (of the goods storage with the view of a particular release order) and possible delivery of a particular goods unit to an appointed location.

After the delivery to the centre, storage and placing goods occurs in any place depending on the parameters employed, e.g. weight, type of goods or the speed of its turnover. The goods are stored for any time, according to the needs of the customer. It is possible to deliver a load to an appointed location or collect a stored load at any time seven days a week and 24 hours a day. The process carried out allows fluent movement of load units, that is europallets or industrial pallets, between the receipt-and-release zone and the high storage zone equipped with multilevel mobile or stationary racks on a few levels.

The load delivered may be collected as a whole or partially. The goods delivered on damaged pallets or pallets other than euro or industrial pallets can be moved to or put on euro or industrial pallets. The process of order realization is monitored both by personnel and the customer through the Internet. The amount of goods, location of storage place and whole process of order realization are monitored. On the basis of a particular order a compilation can be performed, that is out of goods stored a new or several new load units can be composed. The weight and dimensions of the new load unit are checked at the gate. In the event of a positive result as to the warehouse requirements, the goods are marked with a code and let in the storage zone.

## Claims

1. System of warehouse and logistic services **characterized in that** it is a servicing system of logistic and warehouse processes outsourcing, organized in a form of interconnected elements, namely technology, computer system and the manner of communication, to render services to small and medium enterprises, without limitation as to the amount and time of storing goods, occurring in the receipt-and-release, storage and compilation zones, while the storage zone is equipped with mobile or stationary racks of at least four levels, operated by high lift trucks, and the receipt-and-release and compilation zones connected to the storage zone are equipped with a set of conveyors and belt conveyors as well as gate and wrapping machine, while the whole flow of loads and management of traffic of particular equipment elements and controlling the storage space together with the management of work of the whole centre seven days a week and 24 hour a day occurs through a computer system with total control and management of the load stored by the customer from his/her own computer through the Internee.
